# FASCICULE DE BREVET EUROPEEN

(11) **EP 2 661 999 B1**
(45) Date de publication et mention de la délivrance du brevet: **25.11.2015**
(21) Numéro de dépôt: 13166889.9
(22) Date de dépôt: 07.05.2013
(51) Int. Cl.: A47J 31/40, G01F 11/18, A47J 47/01

(54) **Doseur et dispositif distributeur associé**
Dosierer und entsprechender Ausgabeautomat
Dispenser and related dispensing device

(30) Priorité: 09.05.2012 FR 1254196
(43) Date de publication de la demande: 13.11.2013
(73) Titulaire: IN ZE BAG, 19270 Donzenac (FR)
(72) Inventeur: Dumont, Max, 19100 BRIVE LA GAILLARDE (FR)
(74) Mandataire: Fantin, Laurent

(56) Documents cités:
- FR-A1- 2 893 597

## Description

La présente invention concerne la distribution de café moulu en vue de la préparation d'un café dit expresso dans un distributeur de boissons réalisées sur place.

Par café expresso, l'invention entend un café obtenu par percolation sous haute pression à partir de café moulu.

Selon une première configuration utilisée pour préparer un café expresso dans les distributeurs de boissons réalisées sur place, une dose déterminée de grains de café déjà torréfiés est acheminée vers des moyens de mouture, puis la dose de café ainsi moulue est ensuite transférée vers des moyens de percolation pour achever la préparation du café expresso.

Bien que permettant d'obtenir une boisson de qualité, une telle configuration nécessite un entretien régulier pour fonctionner correctement.

En effet, les moyens de mouture ont tendance à s'encrasser et nécessitent un nettoyage régulier.

Un autre inconvénient de cette configuration réside dans l'encombrement des moyens de mouture interposés entre le réceptacle à grains torréfiés et les moyens de percolation. De plus, la forme des grains torréfiés n'autorisant pas un remplissage maximal d'un quelconque réceptacle, ledit réceptacle doit souvent être réapprovisionné, surtout dans les lieux dans lesquels le café est la boisson majoritairement vendue.

Pour parer aux inconvénients liés aux moyens de mouture, il a été développé une autre solution permettant de préparer un café expresso à partir de café moulu sans moudre les grains de café sur place.

Selon cette autre solution, le café moulu est conditionné et distribué sous forme de dosettes individuelles et les moyens de percolation sont adaptés pour recevoir ces dosettes.

Avantageusement, chaque dosette comporte un emballage étanche afin d'augmenter la durée de conservation de la dosette.

Selon un premier inconvénient, ce conditionnement individuel des dosettes entraîne un surcoût pour le consommateur.

Selon un autre inconvénient, la conception des dosettes étant différente d'un fabricant de dosette à l'autre, le dispositif distributeur ne peut généralement fonctionner qu'avec les dosettes du fabricant choisi.

Par conséquent, la vente de café moulu est contrôlée par le fabricant de dosette, les différentes dosettes mises sur le marché étant évidemment conçues de manière à ne pas pouvoir être réutilisées.

Aussi, en raison des inconvénients présentés par les configurations avec moyens de mouture de grains torréfiés et par les solutions utilisant des dosettes de café moulu, la plupart des distributeurs de boissons utilisés actuellement délivrent des cafés dits instantanés, obtenus par réhydratation d'une dose de café en poudre, ou café soluble, préparé par lyophilisation ou atomisation.

Les cafés en poudre présentent en outre l'avantage d'offrir une meilleure conservation dans le temps que le café moulu.

Une configuration de dispositif distributeur adapté à la réalisation de boissons à partir de produits en poudre, et notamment de cafés instantanés à partir de café soluble, est donnée dans le document FR-2.893.597.

Selon ce document FR-2.893.597, afin de délivrer une dose de produit en poudre adaptée à chaque boisson, le dispositif distributeur utilise un doseur à tiroir solidaire d'une cartouche contenant le produit en poudre.

Ce doseur est empli d'un produit en poudre lorsque le tiroir se trouve dans une première position et le produit ainsi dosé est libéré par une ouverture réalisée dans le doseur lorsque le tiroir est amené dans une seconde position.

Cependant, bien qu'ils représentent une solution de distribution fiable et économique, du point de vue des consommateurs, les cafés instantanés ne présentent pas les mêmes qualités gustatives que les cafés expressos.

Aussi, il existe un besoin de distributeurs de boissons capables de délivrer de manière fiable dans le temps et avec un minimum d'entretien des cafés expressos.

En regard de l'art antérieur connu, et plus particulièrement du dispositif distributeur décrit dans le document FR-2.893.597, il a été envisagé de distribuer des doses de café moulu pour les amener directement vers des moyens de percolation adaptés. Cependant, les caractéristiques du café moulu compliquent l'extraction de doses de café moulu depuis un contenant.

En effet, le café moulu est un produit gras et compact qui a tendance à s'agglomérer et à former des mottes.

Aussi, avec un dispositif distributeur tel qu'il est décrit dans le document FR-2.893.597, il est impossible d'obtenir un dosage régulier et indépendant de la finesse de la mouture. Et, la même irrégularité de dosage a été constatée avec un dispositif distributeur amélioré par l'ajout de moyens de mise en vibration, cette amélioration étant décrite dans le document FR-2.895.738.

De plus, et toujours en raison de ses caractéristiques, le café moulu tend à s'agglomérer dans les différents interstices et à colmater les ouvertures des moyens de dosage et de distribution, gênant ainsi leur fonctionnement et modifiant progressivement les doses distribuées.

La présente invention vise à pallier ces inconvénients en apportant des modifications aux dispositifs distributeurs de l'art antérieur, et notamment à ceux décrits dans les documents FR-2.893.597 et FR-2.895.738.

A cet effet, l'invention a pour objet un doseur de dispositif distributeur d'un produit en poudre, le doseur comprenant une trémie fixe, un tiroir mobile en translation par rapport à la trémie, et une raclette de dosage solidaire en translation du tiroir mobile, la trémie comprenant une partie supérieure, une partie inférieure de section inférieure à la section de la partie supérieure, et une partie intermédiaire reliant la partie supérieure à la partie inférieure, la partie supérieure étant ouverte vers le haut pour recevoir par gravité le produit en poudre provenant d'un contenant, la raclette de dosage se translatant dans la partie inférieure, et la partie intermédiaire présentant une section diminuant progressivement pour se réduire à celle de la partie inférieure, la partie intermédiaire comprenant dans sa première moitié avant un pan incliné vers la partie inférieure du doseur, le doseur étant caractérisé en ce qu'il comprend des moyens de guidage du produit en poudre vers le pan incliné de la partie intermédiaire du doseur.

L'invention propose aussi un dispositif distributeur de produit en poudre équipé d'un ou plusieurs doseurs selon l'invention.

D'autres objectifs de la présente invention sont d'améliorer la descente du café moulu, ou de produits en poudre similaires, vers le doseur, d'améliorer la précision du dosage, et de diminuer le bruit produit par le dispositif distributeur lors de la distribution de chaque dose de café moulu.

D'autres caractéristiques et avantages ressortiront de la description qui va suivre de l'invention, description donnée à titre d'exemple uniquement, en regard des dessins annexés sur lesquels :
- la figure 1 représente une vue en perspective d'un dispositif distributeur de produit en poudre équipé de doseurs selon l'invention,
- la figure 2 représente une vue en coupe selon un plan médian longitudinal d'un dispositif distributeur de produit en poudre équipé d'un doseur selon l'invention,
- la figure 3 représente une vue en coupe selon un plan médian longitudinal d'un doseur selon l'invention,
- la figure 4 représente une vue en perspective d'une raclette de dosage d'un doseur selon l'invention,
- la figure 5 représente une vue de dessous d'un couvercle d'un doseur selon l'invention, et
- la figure 6 représente une vue de détail des moyens de détection présents dans les moyens de guidage d'un doseur selon l'invention,
- la figure 7 représente une vue en perspective d'une variante de réalisation d'un couvercle d'un doseur selon l'invention,
- la figure 8 représente une vue en perspective d'une variante de réalisation d'un socle de réception d'un doseur selon l'invention,
- la figure 9 représente une vue de face en perspective en arrachement partiel d'un dispositif distributeur selon l'invention,
- la figure 10 représente une vue arrière en perspective d'un dispositif distributeur selon l'invention,
- la figure 11 représente une vue en perspective d'un châssis d'un dispositif distributeur selon l'invention, et
- la figure 12 représente une vue en perspective d'une variante optimisée d'une trémie d'évacuation d'une dose de café moulu d'un dispositif distributeur selon l'invention.

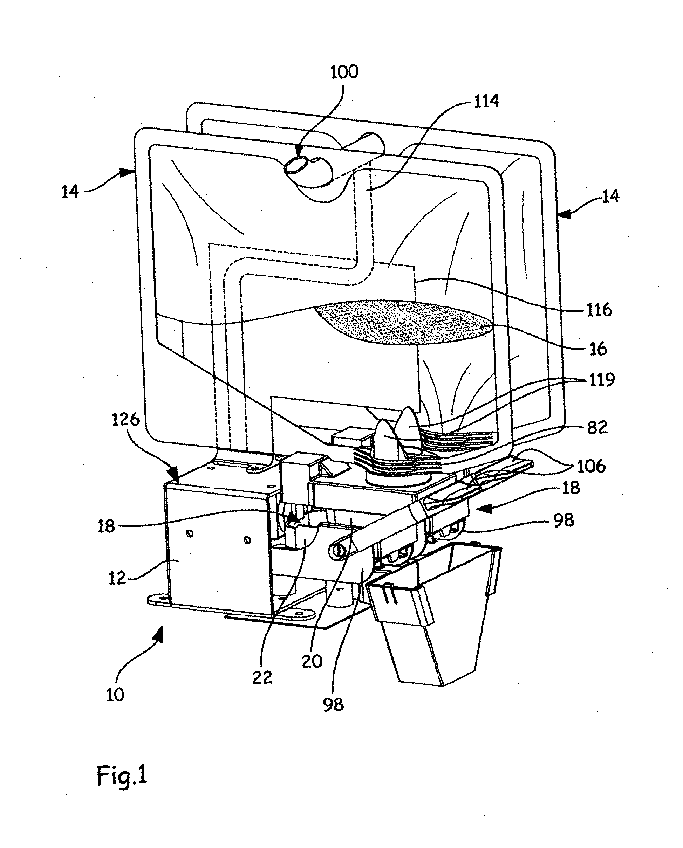

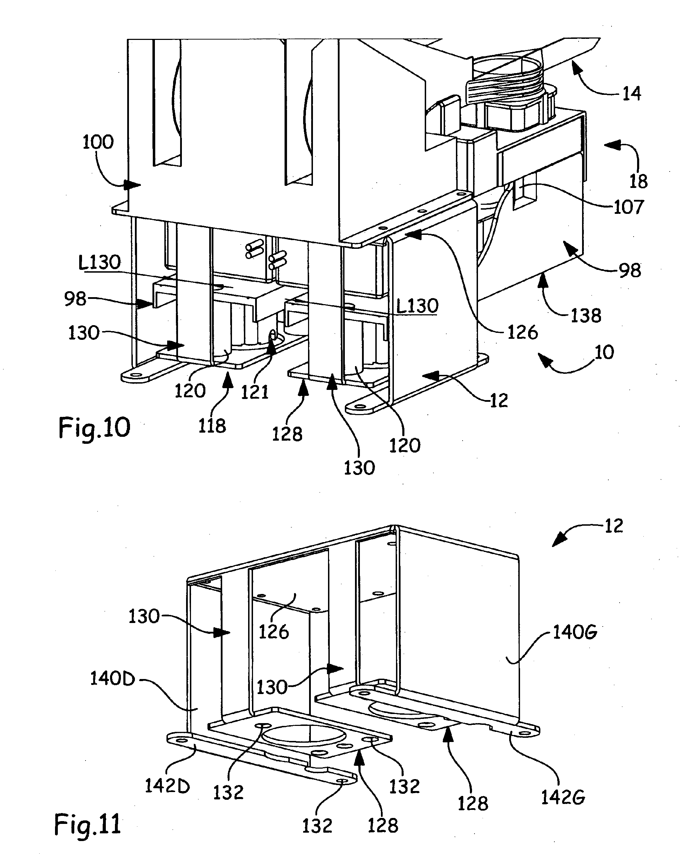

La présente invention est relative à un dispositif distributeur 10 de produit en poudre tel qu'il est illustré en figure 1, 9 et 10.

Ce dispositif distributeur 10 est plus particulièrement destiné au dosage et à la distribution de café moulu pour la réalisation de cafés dits expressos dans un distributeur de boissons réalisées sur place.

A cet effet, le dispositif distributeur 10 est monté sur un châssis 12 destiné à être fixé au châssis intérieur d'un distributeur de boissons.

Dans une exploitation prévue par l'invention, le dispositif distributeur 10 est destiné à venir remplacer le contenant à grains de café torréfiés et les moyens de mouture de ces grains présents dans certains distributeurs de boissons existants pour délivrer des cafés expressos.

Aussi, le châssis 12 est avantageusement adapté pour permettre la fixation du dispositif distributeur 10 en lieu et place du contenant à grains de café torréfiés et des moyens de mouture présents dans ces distributeurs existants.

Selon l'invention, et tel que prévu dans le document FR-2.893.597, le dispositif distributeur 10 comprend au moins un doseur à tiroir 18 solidaire d'un contenant 14 rempli avec le produit à distribuer, en l'occurrence du café moulu 16.

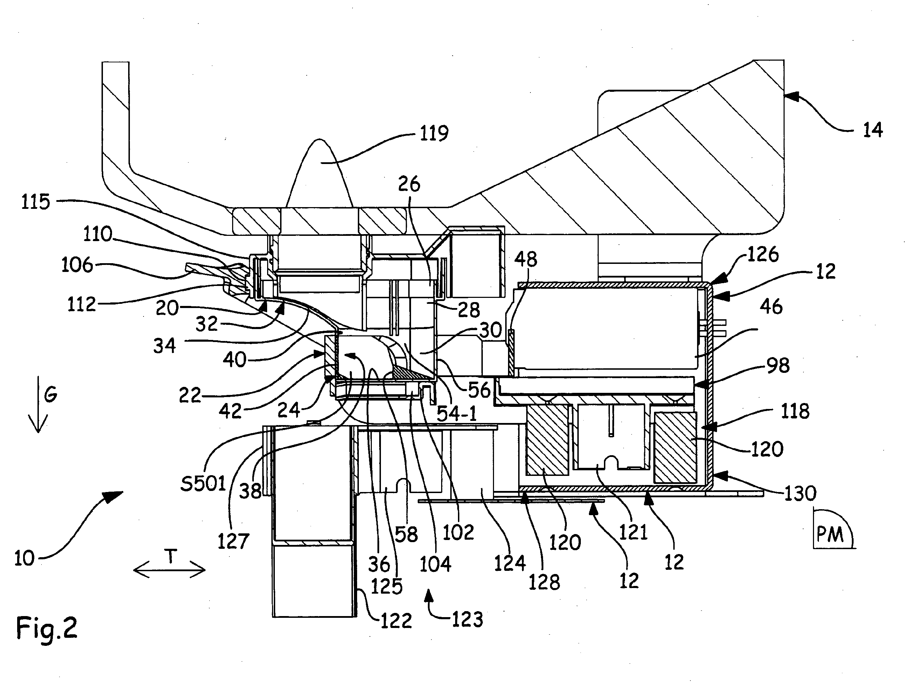

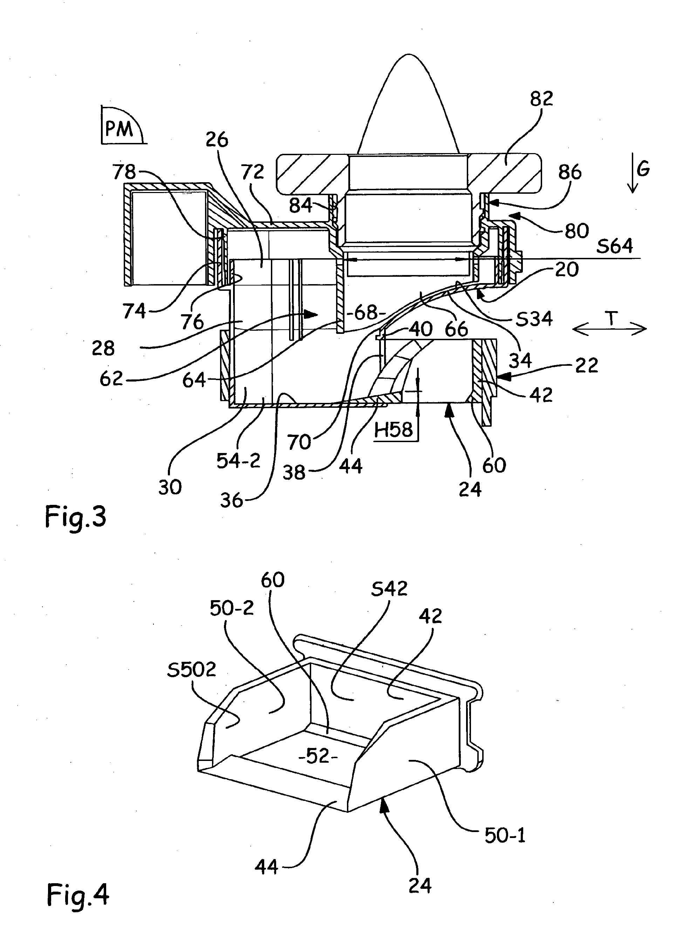

Toujours de façon connue, et comme représenté par les coupes selon un plan médian PM illustrées en figures 2 et 3, le doseur à tiroir 18 comprend une trémie 20 fixe, un tiroir 22 mobile en translation par rapport à la trémie 20, et une raclette 24 de dosage solidaire en translation du tiroir 22 mobile.

La trémie 20 comprend une partie supérieure 26, une partie inférieure 30 de section inférieure à la section de la partie supérieure, et une partie intermédiaire 28 reliant la partie supérieure 26 à la partie inférieure 30.

La partie supérieure 26 est ouverte vers le haut pour recevoir par gravité le café moulu 16 provenant du contenant 14, la raclette 24 de dosage se translate dans la partie inférieure 30, et la partie intermédiaire 28 présente une section diminuant progressivement pour se réduire à celle de la partie inférieure 30.

Le tiroir 22 mobile est monté sur glissière par rapport à la partie inférieure 30 de la trémie 20.

Afin de pouvoir être échangée, la raclette 24 de dosage est solidarisée de manière amovible au tiroir 22.

La partie intermédiaire 28 comprend dans sa première moitié avant 32 un pan 34 incliné vers la partie inférieure 30 du doseur 18.

Ce pan 34 incliné permet l'écoulement du café moulu 16 arrivant par gravité.

La pente du pan 34 incliné est choisie de manière à éviter tout phénomène de voûtage du café moulu 16 dans le doseur 18.

Dans le même objectif, et afin d'amener le café moulu 16 progressivement vers la partie inférieure 30 et la raclette 24 de dosage, notamment sous l'effet de vibrations, le pan 34 incliné a un profil bombé vers le haut.

Selon l'invention, afin d'éviter toute accumulation de café moulu 16, le pan 34 incliné débouche directement dans la partie inférieure 30.

Par déboucher directement, l'invention entend que le pan 34 incliné ne comprend pas de prolongement à l'intérieur de la partie inférieure 30.

De façon connue, la raclette 24 se translate sur le fond 36 de la partie inférieure 30 et au travers d'une fenêtre 38 réalisée dans la paroi avant 40 de la partie inférieure 30. Le tiroir 22 et la raclette 24 se déplacent en translation T entre une première position de remplissage en café moulu 16 de la raclette 24, illustrée en figure 2, et une deuxième position de distribution d'une dose de café moulu 16, illustrée en figure 3.

De préférence, la translation T du tiroir 22 et de la raclette 24 s'effectue selon une direction horizontale, sensiblement perpendiculaire à la gravité G.

Dans la première position de remplissage, la raclette 24 de dosage est rentrée dans la partie inférieure 30, et dans la deuxième position de distribution, la raclette 24 est sortie de la partie inférieure 30.

La raclette 24 selon l'invention, adaptée au dosage du café moulu 16, est illustrée en coupe sur les figures 2 et 3, et en perspective sur la figure 4.

Cette raclette 24 comprend une paroi avant 42 et une partie de raclage 44 à l'arrière, la partie de raclage 44 étant reliée à la paroi avant 42 par deux ailes latérales 50-1,50-2, et une ouverture 52 séparant la paroi avant 42 de la partie de raclage 44 et une aile latérale de l'autre.

La surface de l'ouverture 52 définit en partie la dose de café moulu 16 qui sera distribuée lors de la sortie de la raclette 24.

Aussi, dans la première position de remplissage, la fenêtre 38, et donc la partie inférieure 30, est fermée par la paroi avant 42 de la raclette 24, ce qui permet de remplir la raclette 24 de dosage de café moulu 16, notamment à l'aide de vibrations.

Et, lors du mouvement de sortie vers la deuxième position de distribution, la partie de raclage 44 située à l'arrière de la raclette 24 entraîne l'expulsion, et donc la distribution, d'une dose déterminée de café moulu 16 hors du doseur 18.

La partie inférieure 30 de la trémie 20 étant formée par le fond 36, la paroi avant 40, ainsi que par deux faces latérales 54-1,54-2 et une paroi arrière 56, il est prévu que les ailes latérales 50-1,50-2 de la raclette 24 coulissent au plus près des faces latérales 54-1,54-2, et que la partie de raclage 44 et la paroi avant 42 de la raclette 24 coulissent au plus près du fond 36, ceci afin d'éviter toute accumulation de café sur le fond 36 et les faces latérales 54-1,54-2.

Pour améliorer le raclage, la partie de raclage 44 et les ailes latérales 50-1,50-2 de la raclette 24 sont affûtées vers l'arrière de la raclette 24.

Afin d'éviter des dysfonctionnements du doseur 18, la partie de raclage 44 vient en butée contre la paroi arrière 56 de la partie inférieure 30.

De préférence, la partie de raclage 44 a une section transversale triangulaire avec une surface frontale 58 de hauteur H58.

Selon l'invention, le dosage en café moulu 16 est principalement dépendant de la hauteur H58 de la surface frontale 58 de la partie de raclage 44, en plus d'être fonction de la surface de l'ouverture 52.

Aussi, pour modifier la dose de café moulu 16 distribuée, il suffit de disposer de différentes raclettes 24 offrant des parties de raclage 44 avec des surfaces frontales 58 de différentes hauteurs H58.

Afin de pouvoir échanger une raclette 24 contre une autre, soit en raison de son usure soit pour modifier la dose de café moulu 16 distribuée, la raclette 24 est solidarisée de manière amovible au tiroir 22 par sa paroi avant 42.

Par exemple, la raclette 24 est solidarisée au tiroir 22 par l'intermédiaire de languettes s'étendant depuis sa paroi avant 42 et de rainures réalisées dans le tiroir 22.

De façon connue, le tiroir mobile 22 et la raclette 24 sont entraînés en translation T manuellement, ou par l'intermédiaire d'un actionneur 46 agissant sur la partie arrière 48 du tiroir 22.

Selon l'invention, afin d'éviter que le café moulu 16 ne colmate peu à peu l'ouverture 52 de la raclette 24, la paroi avant 42 et les ailes latérales 50-1,50-2 présentent des surfaces intérieures S42,S501,S502 planes et verticales, et la surface frontale 58 de la partie de raclage 44 est aussi plane et verticale.

Aussi, afin d'éviter un soulèvement de la paroi avant 42 de la raclette 24, cette paroi avant 42 comprend au bas de sa surface intérieure S42 une lèvre de raclage 60.

Cette lèvre de raclage 60 permet d'ôter le café moulu 16 susceptible de passer sous ladite paroi avant 42.

Afin de réguler le café moulu 16 arrivant par gravité du contenant 14 et s'écoulant vers la partie inférieure 30 du doseur 18, le doseur 18 selon l'invention comprend des moyens de guidage 62 du café moulu 16 vers le pan 34 incliné de la partie intermédiaire 28 du doseur.

Ces moyens de guidage 62 prennent la forme d'un conduit 64 vertical disposé au-dessus du pan 34 incliné.

Afin de guider le café moulu 16 jusqu'au pan 34 incliné, l'extrémité inférieure 66 du conduit 64 est biseautée de manière à épouser le profil, notamment bombé, de la surface supérieure S34 du pan 34 incliné.

Aussi, et compte tenu du guidage du café moulu 16 jusqu'au ras de la surface supérieure S34 du pan 34 incliné, un passage d'écoulement 68 est prévu entre l'extrémité inférieure 66 du conduit 64 et le pan incliné 34.

Comme illustré en figure 3, et afin de créer le passage d'écoulement 68, la section de guidage S64 du conduit s'étend au-delà du bord inférieur 70 du pan 34 incliné.

Toutefois, afin de réguler l'écoulement du café moulu 16, la section de guidage S64 s'étend principalement au-dessus du pan incliné 34.

Ainsi, le café moulu 16 arrivant du contenant 14 est principalement guidé vers le pan incliné 34 dont la pente favorise l'écoulement du café moulu 16, notamment à l'aide de vibrations.

De plus, le fait d'amener principalement le café moulu 16 sur le pan 34 incliné améliore la précision du dosage.

Dans un mode de réalisation, le conduit 64 est cylindrique et sa section de guidage S64 est circulaire.

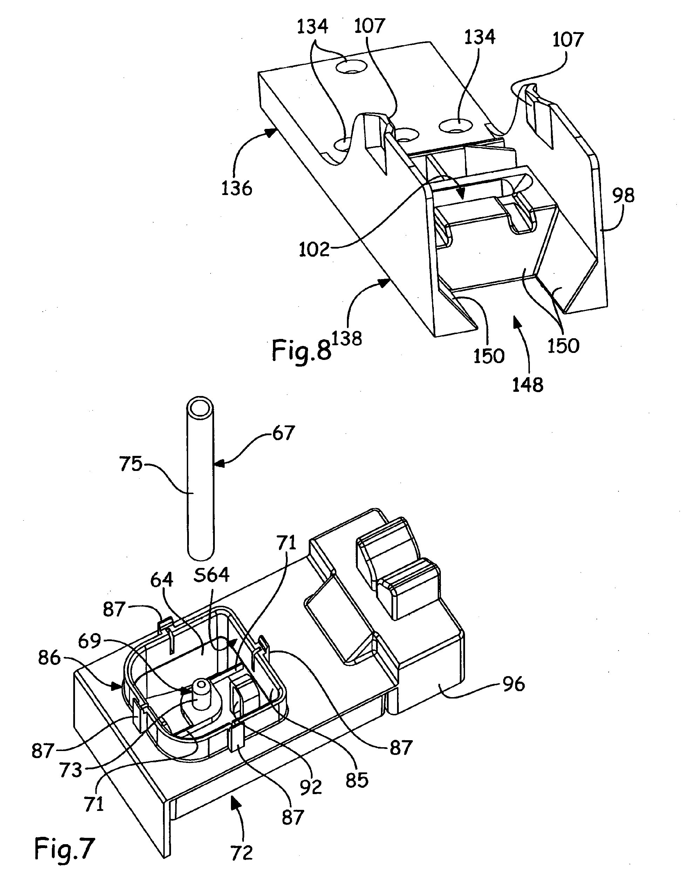

Toutefois, et comme l'illustre la figure 7, le conduit 64 peut avoir une section de guidage S64 sensiblement rectangulaire, avec des coins arrondis pour éviter l'encrassement progressif du conduit 64.

Cette section rectangulaire est plus grande que la section cylindrique, et elle contribue à améliorer l'écoulement du café moulu 16 vers le pan incliné 34 de la trémie 20. Avantageusement, cette section de guidage S64 rectangulaire comprend des coins arrondis avec différents rayons de courbure afin de servir de détrompeur lors de la mise en place d'un nouveau contenant 14 sur le doseur 18.

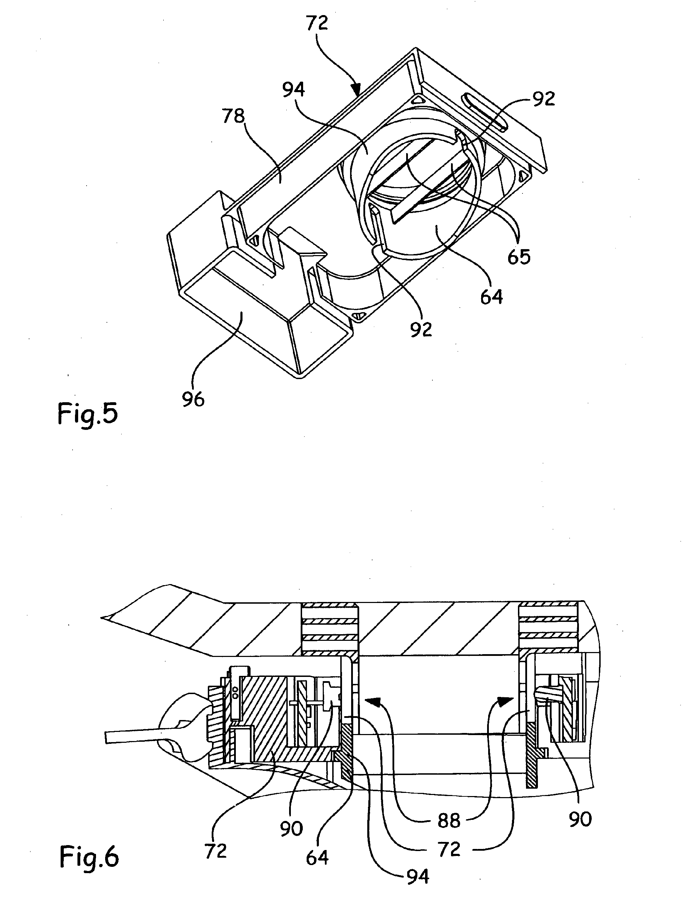

Dans l'objectif d'améliorer le guidage du café moulu 16, et donc son dosage, et de casser les éventuelles mottes de café moulu 16 tombant du contenant 14, le conduit 64 peut comprendre une ou plusieurs lames 65 le traversant à l'intérieur de part en part, comme illustré par la vue de dessous en figure 5.

Le conduit 64 peut être traversé par des lames 65 parallèles, ou éventuellement par des lames 65 qui se croisent à l'intérieur de celui-ci.

La partie supérieure 26 de la trémie 20 étant fermée par un couvercle 72, le conduit 64 est maintenu au-dessus du pan incliné 34 par ce couvercle 72.

De préférence, le conduit 64 vient de fabrication avec le couvercle 72, par exemple par un procédé de moulage par injection.

Toutefois, en variante, le conduit 64 peut être fixé au travers du couvercle 72 par tous moyens appropriés et connus de l'homme du métier.

En variante ou en complément des lames traversantes 65, et comme illustré en figure 7, le conduit 64 peut comporter un support 69 pour un accessoire 67 destiné à casser, notamment avec la mise en vibration du doseur 18, les voûtes de café moulu 16 pouvant se former dans un contenant 14.

Dans l'exemple représenté en figure 7, le support 69 est maintenu à l'intérieur du conduit 64 par deux bras 71 faisant aussi office de lames traversant le conduit 64.

Et, le support 69 comprend un téton 73 sur lequel est enfilé l'accessoire 67 prenant la forme d'une tige creuse 75.

Pour la fixation, notamment par collage, du couvercle 72 sur la partie supérieure 26 de la trémie 20, il est prévu une gorge 74 le long du bord supérieur 76 de la partie supérieure 26 dans laquelle est insérée une paroi 78 du couvercle.

Grâce à l'agencement de cette fixation, le couvercle 72 est relié de manière étanche à la partie supérieure 26 de la trémie 20.

Le doseur 18 comprend en outre des moyens de réception 80 d'un contenant 14 rempli de café moulu 16.

Un contenant 14 selon l'invention prenant de préférence la forme d'une poche souple à bouchon 82 fileté, ces moyens de réception 80 prennent la forme d'un alésage 84 taraudé dans lequel vient se visser le bouchon 82.

Avantageusement, l'alésage 84 taraudé est prévu en partie supérieure 86 du conduit 64. En variante, et comme illustré en figure 7, les moyens de réception 80 peuvent prendre la forme d'un alésage 85 lisse, le bouchon 82 d'un contenant souple 14 étant alors maintenu par des clips 87 prévus en bordure extérieure de la partie supérieure 86 du conduit 64.

Dans une autre variante non illustrée, les moyens de réception 80 peuvent aussi prendre la forme d'un alésage cranté.

Dans un mode de réalisation optimisé, et illustré par la vue de détail en figures 6 et 7, le doseur 18 comprend des moyens de détection 88 du produit, en l'occurrence du café moulu 16, passant dans le conduit 64.

Ces moyens de détection 88 sont utilisés pour savoir quand le contenant 14 est vide.

De préférence, ces moyens de détection 88 sont prévus dans le couvercle 72 autour du conduit 64.

Ces moyens de détection 88 utilisent une technologie infrarouge pour contrôler la présence de café moulu 16 dans le conduit 64.

A cet effet, ces moyens de détection 88 prennent la forme de DEL infrarouges 90 positionnées en vis-à-vis dans des lumières 92 réalisées dans la paroi 94 du conduit 64. Afin de disposer d'une alimentation autonome, un logement 96 est prévu à l'arrière du couvercle 72 pour y placer des moyens d'alimentation électrique des moyens de détection 88.

Avantageusement, ce positionnement du logement 96 à l'arrière du couvercle 72 permet de prévoir dans le dispositif distributeur 10 des moyens pour recharger les moyens d'alimentation électrique placés dans le logement 96.

Comme illustré en figure 1, le dispositif distributeur 10 permet de recevoir un ou plusieurs doseurs à tiroir 18 chacun relié à un contenant 14.

A cet effet, le dispositif distributeur 10 comprend un socle 98 de réception pour chaque doseur 18 et des moyens de maintien 100 de chaque contenant 14 au-dessus du doseur 18 auquel il est relié.

Selon l'invention, et comme illustré en figures 2 et 8, chaque socle 98 comprend une butée de positionnement 102 contre laquelle vient en appui au moins un ergot 104 prévu sous le doseur 18, et un levier de maintien en position 106 venant s'emboîter sur le doseur 18.

Plus précisément, l'ergot 104 s'étend sous la partie inférieure 30 de la trémie 20, le levier de maintien en position 106 est articulé en rotation par rapport au socle 98, et le levier de maintien en position 106 comprend une rainure 110 venant s'emboîter sur une languette 112 prévue sur la face avant 115 du couvercle 72.

En variante du levier 106, et comme illustré par les figures 8, 9 et 10, chaque socle 98 peut comprendre des clips latéraux de maintien en position 107 venant s'emboîter sur le doseur 18.

Un contenant 14 à café moulu 16 selon l'invention prenant de préférence la forme d'une poche souple, les moyens de maintien 100 prennent la forme d'au moins un bras 114 permettant de suspendre chaque contenant 14 au-dessus du doseur 18 associé. Avantageusement, il peut être prévu une plaque de séparation 116 entre deux contenants 14.

Bien entendu, chaque socle 98 de réception, les moyens de maintien 100 et la plaque de séparation 116 sont reliés au châssis 12 du dispositif distributeur 10.

Afin de favoriser l'écoulement du café moulu 16 et le remplissage du doseur 18 avant chaque distribution, il est prévu des moyens de mise en vibration 118 de chaque socle 98. Ces moyens de mise en vibration 118 prennent la forme de silentblocs 120 interposés entre le châssis 12 et chaque socle 98, et d'un vibrateur 121 fixé à chaque socle 98. Selon l'invention, et comme illustré par les figures 2, 9, 10 et 11, le châssis 12 comprend une plateforme 126 sur laquelle sont fixés les moyens de maintien 100 de chaque contenant 14 et à laquelle est suspendu de manière flottante le socle 98 de réception de chaque doseur 18.

Par suspendu de manière flottante, l'invention entend que chaque socle 98 n'est pas maintenu de manière parfaitement rigide et qu'il peut osciller sensiblement sous l'effet de ses moyens de mise en vibration 118.

Grâce ce montage flottant, les vibrations générées par les moyens de mise en vibration 118 se propagent moins vers la plateforme 126 du châssis 12. En évitant ainsi de faire osciller l'ensemble du dispositif distributeur 10, le bruit de fonctionnement du dispositif distributeur 10 est réduit lors de la distribution de chaque dose de café moulu 16.

En vue d'un montage flottant indépendant de chaque doseur 18, chaque socle 98 de réception est suspendu par l'intermédiaire d'une plaque flottante 128 distincte.

Pour l'obtention de ce montage flottant, chaque plaque flottante 128 est suspendue sous la plateforme 126 par un bras de suspension 130 distinct.

Dans un mode de réalisation préféré, chaque bras de suspension 130 s'étend perpendiculairement à la plateforme 126 et en-dessous de celle-ci, et chaque plaque flottante 128 s'étend perpendiculairement au bras de suspension 130 auquel elle est suspendue.

En vue de réduire l'encombrement du châssis 12 et donc du dispositif distributeur 10, chaque plaque flottante 128 se situe sous la plateforme 126 et donc du même côté que cette plateforme par rapport à son bras de suspension 130.

Avantageusement, la largeur L130 de chaque bras de suspension 130 est adaptée en fonction des caractéristiques d'écoulement du café moulu 16 distribué par le doseur 18 du socle 98 suspendu par l'intermédiaire de ce bras 130.

Par exemple, la largeur L130 de chaque bras de suspension 130 est modifiée en fonction de l'amplitude et de la fréquence des vibrations nécessaires pour assurer au mieux la descente du café moulu 16 dans le doseur 18.

Mécaniquement, plus la largeur L130 d'un bras 130 est réduite, plus la plaque flottante 128 supportée par ce bras 130 présente un comportement flottant.

Selon l'invention, les moyens de mise en vibration 118 prenant la forme de silentblocs 120 interposés entre le châssis 12 et chaque socle 98, et d'un vibrateur 121 fixé à chaque socle 98, chaque socle 98 est rapporté sur une plaque flottante 128 distincte par l'intermédiaire des silentblocs 120 de ses moyens de mise en vibration 118.

Les moyens de mise en vibration 118 comprenant de préférence trois silentblocs 120, trois alésages 132 sont prévus dans chaque plaque flottante 128, et au moins trois alésages 134 sont prévus dans chaque socle 98.

Toujours selon l'invention, chaque socle 98 recevant un doseur 18 dans sa partie frontale 138, la partie arrière 136 de chaque socle 98 est utilisée pour la fixation du socle 98 sur les silentblocs 120 de ses moyens de mise en vibration 118.

En vue d'obtenir un montage stable et résistant de chaque doseur 18, la partie arrière 136 de chaque socle 98 est de préférence reliée à une plaque flottante 128 distincte par trois silentblocs 120 non alignés.

Afin d'être protégé des éventuelles chutes de café moulu 16, le vibrateur 121 des moyens de mise en vibration 118 de chaque socle 98 est fixé sous la partie arrière 136 de ce socle 98 et entre les silentblocs 120.

Enfin, pour la liaison du châssis 12 du dispositif distributeur 10 au châssis intérieur d'un distributeur de boissons ou à un quelconque bâti, le châssis 12 comprend des parois latérales droite et gauche 140D et 140G s'étendant sous la plateforme 126 et s'étendant au-delà du bras de suspension 130 de chaque plaque flottante 128.

De préférence, ces parois latérales droite et gauche 140D et 140G s'étendent perpendiculairement à la plateforme 126 et elles se terminent par des pattes de fixation 142D et 142G au châssis intérieur d'un distributeur de boissons ou à un quelconque bâti.

Avantageusement, il peut aussi être prévu de mettre en vibration les contenants 14 par l'intermédiaire des moyens de maintien 100.

Selon l'invention, chaque contenant 14 à café moulu 16 prenant la forme d'une poche souple à bouchon 80, le bouchon 80 peut être équipé d'oreilles 119 permettant d'éviter un rapprochement des parois du contenant souple 14 susceptible d'empêcher l'écoulement du café moulu 16.

Enfin, en vue de l'installation du dispositif distributeur 10 en lieu et place du contenant à grains de café torréfiés et des moyens de mouture présents dans un distributeur existant, le dispositif distributeur 10 comprend une trémie d'évacuation 122 placée sous chaque doseur 18.

Cette trémie d'évacuation 122 permet de conduire la dose de café moulu 16 délivrée par un doseur 18 vers les moyens de percolation du distributeur de boissons.

Avantageusement, afin d'éviter un encrassement progressif de la trémie d'évacuation 122, il est prévu des moyens de mise en vibration 123 associant par exemple un vibrateur 125 et des silentblocs 124 interposés entre le châssis 12 et chaque trémie 122.

Grâce aux silentblocs 124, ces moyens de mise en vibration 123 de la trémie d'évacuation 122 sont indépendants des autres moyens de mise en vibration du dispositif distributeur 10.

De préférence, chaque trémie 122 est emboîtable afin de pouvoir être retirée de son support et nettoyée.

Dans une première variante illustrée par les figures 1 et 2, une même trémie 122 est maintenue sous deux doseurs 18 par un support 127 relié au châssis 12 par les silentblocs 124 des moyens de mise en vibration 123 de la trémie.

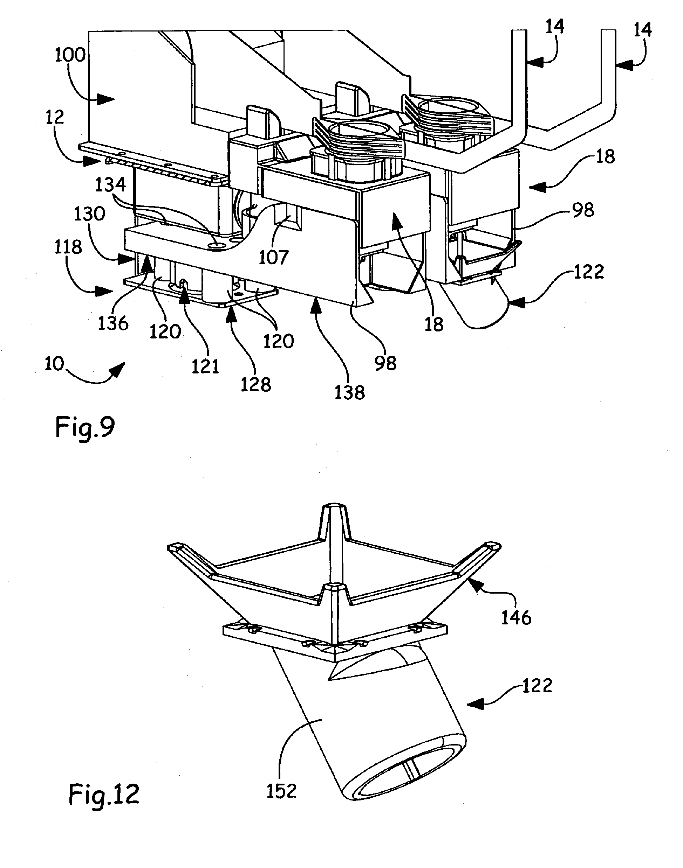

Dans une deuxième variante optimisée et illustrée sur les figures 9 et 12, une trémie 122 est maintenue sous chaque doseur 18 par le socle 98 recevant ce doseur.

A cet effet, la trémie 122 comprenant une embase de fixation 146 au socle 98 en forme de tronc de pyramide inversé, la partie frontale 138 de chaque socle 98 comprend un logement ouvert 148 de réception de forme correspondante à cette embase, c'est-à-dire formé par trois pans 150 inclinés et sécants, comme le montre la figure 8. Avantageusement, la trémie 122 comprenant en outre une sortie cylindrique inclinée 152 s'étendant sous la partie de fixation 146, l'embase de fixation 146 et le logement ouvert 148 sont symétriques selon leurs deux plans médians afin de pouvoir choisir l'orientation de la sortie cylindrique inclinée 152.

Le dispositif distributeur 10 est particulièrement conçu pour permettre un dosage régulier et une distribution fiable à long terme de café moulu 16.

Toutefois, la présente invention couvre aussi une utilisation du dispositif distributeur 10 et du doseur 18 qui viennent d'être décrits pour la distribution d'autres produits en poudre, notamment un produit moulu, gras, compact, et ayant tendance à s'agglomérer.

## Revendications

1. Doseur (18) de dispositif distributeur (10) d'un produit en poudre (16), le doseur (18) comprenant une trémie (20) fixe, un tiroir (22) mobile en translation par rapport à la trémie (20), et une raclette (24) de dosage solidaire en translation du tiroir (22) mobile, la trémie (20) comprenant une partie supérieure (26), une partie inférieure (30) de section inférieure à la section de la partie supérieure, et une partie intermédiaire (28) reliant la partie supérieure (26) à la partie inférieure (30), la partie supérieure (26) étant ouverte vers le haut pour recevoir par gravité le produit en poudre (16) provenant d'un contenant (14), la raclette (24) de dosage se translatant dans la partie inférieure (30), et la partie intermédiaire (28) présentant une section diminuant progressivement pour se réduire à celle de la partie inférieure (30), la partie intermédiaire (28) comprenant dans sa première moitié avant (32) un pan (34) incliné vers la partie inférieure (30) du doseur, le doseur (18) étant **caractérisé en ce qu'**il comprend des moyens de guidage (62) du produit en poudre (16) vers le pan (34) incliné de la partie intermédiaire (28) du doseur.

2. Doseur (18) selon la revendication 1, dans lequel les moyens de guidage (62) prennent la forme d'un conduit (64) vertical disposé au-dessus du pan (34) incliné.

3. Doseur (18) selon la revendication 2, dans lequel, l'extrémité inférieure (66) du conduit (64) étant biseautée de manière à épouser le profil de la surface supérieure (S34) du pan (34) incliné, un passage d'écoulement (68) est prévu entre l'extrémité inférieure (66) du conduit (64) et le pan incliné (34).

4. Doseur (18) selon la revendication 3, dans lequel la section de guidage (S64) du conduit s'étend au-delà du bord inférieur (70) du pan (34) incliné afin de créer le passage d'écoulement (68), et dans lequel la section de guidage (S64) s'étend principalement au-dessus du pan incliné (34).

5. Doseur (18) selon l'une des revendications 2 à 4, dans lequel le conduit (64) comprend une ou plusieurs lames (65) le traversant à l'intérieur de part en part.

6. Doseur (18) selon l'une des revendications 2 à 5, dans lequel, la partie supérieure (26) de la trémie (20) étant fermée par un couvercle (72), le conduit (64) est maintenu au-dessus du pan incliné (34) par ce couvercle (72).

7. Doseur (18) selon la revendication 6, dans lequel le conduit (64) vient de fabrication avec le couvercle (72).

8. Doseur (18) selon l'une des revendications 2 à 7, dans lequel, le doseur (18) comprenant des moyens de détection (88) du produit en poudre (16) passant dans le conduit (64), ces moyens de détection (88) prennent la forme de DEL infrarouges (90) positionnées en vis-à-vis dans des lumières (92) réalisées dans la paroi (94) du conduit (64).

9. Doseur (18) selon l'une des revendications 2 à 8, dans lequel, le doseur (18) comprenant des moyens de réception (80) d'un contenant (14), ces moyens de réception (80) prennent la forme d'un alésage (84) prévu en partie supérieure (86) du conduit (64).

10. Doseur (18) selon l'une des revendications précédentes, dans lequel le pan (34) incliné débouche directement dans la partie inférieure (30).

11. Doseur (18) selon l'une des revendications précédentes, dans lequel, la raclette (24) comprenant une paroi avant (42) et une partie de raclage (44) à l'arrière, la partie de raclage (44) étant reliée à la paroi avant (42) par deux ailes latérales (50-1,50-2), une ouverture (52) séparant la paroi avant (42) de la partie de raclage (44) et une aile latérale de l'autre, et la partie de raclage (44) ayant une section transversale triangulaire avec une surface frontale (58) de hauteur (H58), la paroi avant (42) et les ailes latérales (50-1,50-2) présentent des surfaces intérieures (S42,S501,S502) planes et verticales, et la surface frontale (58) de la partie de raclage (44) est aussi plane et verticale.

12. Doseur (18) selon la revendication 11, dans lequel la paroi avant (42) comprend au bas de sa surface intérieure (S42) une lèvre de raclage (60).

13. Dispositif distributeur (10) de produit en poudre (16), le dispositif distributeur (10) étant monté sur un châssis (12), le dispositif distributeur (10) recevant un ou plusieurs doseurs (18) selon l'une des revendications précédentes et chacun relié à un contenant (14).

14. Dispositif distributeur (10) selon la revendication 13, dans lequel, le dispositif distributeur (10) comprenant un socle (98) de réception pour chaque doseur (18) et des moyens de maintien (100) de chaque contenant (14) au-dessus du doseur (18) auquel il est relié, chaque socle (98) comprend une butée de positionnement (102) contre laquelle vient en appui au moins un ergot (104) prévu sous le doseur (18), et des moyens de maintien en position (106,107) venant s'emboîter sur le doseur (18), et les moyens de maintien (100) prennent la forme d'au moins un bras (114) permettant de suspendre chaque contenant (14) au-dessus du doseur (18) associé.

15. Dispositif distributeur (10) selon l'une des revendications 13 ou 14, dans lequel le dispositif distributeur (10) comprend une trémie d'évacuation (122) placée sous chaque doseur (18).

## Patentansprüche

1. Dosierer (18) einer Ausgabevorrichtung (10) eines pulverförmigen Produkts (16), wobei der Dosierer (18) einen festen Trichter (20), einen bezüglich dem Trichter (20) verschiebbaren Einschub (22) und einen zusammen mit dem beweglichen Einschub (22) verschiebbaren Schaber (24) aufweist, wobei der Trichter (20) einen oberen Abschnitt (26), einen unteren Abschnitt (30) mit einem Querschnitt kleiner dem Querschnitt des oberen Abschnitts und einen mittleren Abschnitt (28) aufweist, der den oberen Abschnitt (26) mit dem unteren Abschnitt (30) verbindet, wobei der obere Abschnitt (26) nach oben hin offen ist, um das von einem Behälter (14) stammende pulverförmige Produkt (16) mittels der Schwerkraft aufzunehmen, wobei sich der Schaber (24) für die Dosierung im unteren Abschnitt (30) bewegt und der mittlere Abschnitt (28) einen Querschnitt aufweist, der sich zunehmend verringert, um sich auf denjenigen des unteren Abschnitts (30) zu verkleinern, wobei der mittlere Abschnitt (28) in seiner ersten vorderen Hälfte (32) eine zum unteren Abschnitt (30) des Dosierers geneigte Schrägfläche (34) aufweist, wobei der Dosierer (18) **dadurch gekennzeichnet ist, dass** dieser für das pulverförmige Produkt (16) Führungsmittel (62) zu der zum unteren Abschnitt (28) des Dosierers geneigten Schrägfläche (34) aufweist.

2. Dosierer (18) nach Anspruch 1, bei dem die Führungsmittel (62) die Gestalt einer senkrechten Führung (64) aufweisen, die über der geneigten Schrägfläche (34) angeordnet ist.

3. Dosierer (18) nach Anspruch 2, bei dem eine Abflusspassage (68) zwischen dem unteren Ende (66) der Führung (64) und der geneigten Schrägfläche (34) vorgesehen ist, wobei das untere Ende (66) der Führung (64) angeschrägt ist, um dem Profil der oberen Oberfläche (S34) der geneigten Schrägfläche (34) zu folgen.

4. Dosierer (18) nach Anspruch 3, bei dem sich der Führungsquerschnitt (S64) der Führung über den unteren Rand (70) der geneigten Schrägfläche (34) erstreckt, um die Abflusspassage (68) zu schaffen, und bei dem sich der Führungsquerschnitt (S64) hauptsächlich über der geneigten Schrägfläche (34) erstreckt.

5. Dosierer (18) nach einem der Ansprüche 2 bis 4, bei dem die Führung (64) eine oder mehrere Stege (65) aufweist, die diese im Inneren von einer Seite zur anderen durchqueren.

6. Dosierer (18) nach einem der Ansprüche 2 bis 5, bei dem der obere Abschnitt (26) des Trichters (20) durch einen Deckel (72) verschlossen ist und die Führung (64) oberhalb der geneigten Schrägfläche (34) durch diesen Deckel (72) gehalten ist.

7. Dosierer (18) nach Anspruch 6, bei dem die Führung (64) zusammen mit dem Deckel (72) hergestellt ist.

8. Dosierer (18) nach einem der Ansprüche 2 bis 7, bei dem der Dosierer (18) Erfassungsmittel (88) für das pulverförmige Produkt (16) aufweist, das durch die Führung (64) hindurchläuft, und bei dem die Erfassungsmittel (88) die Gestalt von Infrarot-LEDs (90) aufweisen, die gegenüber von Öffnungen (92) angeordnet sind, die in der Wand (94) der Führung (64) ausgebildet sind.

9. Dosierer (18) nach einem der Ansprüche 2 bis 8, bei dem der Dosierer (18) Aufnahmemittel (80) für einen Behälter (14) aufweist, wobei die Aufnahmemittel (80) die Gestalt einer Durchführung (84) aufweisen, die im oberen Abschnitt (86) der Führung (64) vorgesehen ist.

10. Dosierer (18) nach einem der vorhergehenden Ansprüche, bei dem die geneigte Schrägfläche (34) unmittelbar im unteren Abschnitt (30) endet.

11. Dosierer (18) nach einem der vorhergehenden Ansprüche, bei dem der Schaber (24) eine vordere Wand (42) und einen hinteren Schaberabschnitt (44) aufweist, wobei der Schaberabschnitt (44) mit der vorderen Wand (42) durch zwei Seitenwände (50-1, 50-2) verbunden ist und eine Öffnung (52) die vordere Wand (42) des Schaberabschnitts (44) und die Seitenwände voneinander trennt, und wobei der Schaberabschnitt (44) einen querverlaufenden dreieckförmigen Querschnitt mit einer Stirnfläche (58) der Höhe (H58) aufweist, und bei dem die vordere Wand (42) und die Seitenwände (50-1, 50-2) flache und senkrechte Innenflächen (S42, S501, S502) aufweisen und die Stirnfläche (58) des Schaberabschnitts (44) auch flach und senkrecht ausgebildet ist.

12. Dosierer (18) nach Anspruch 11, bei dem die vordere Wand (42) an der Basis ihrer Innenfläche (S42) eine Schablippe (60) aufweist.

13. Ausgabevorrichtung (10) für pulverförmige Produkte (16), wobei die Ausgabevorrichtung (10) auf einem Gestell (12) angebracht ist und die Ausgabevorrichtung (10) einen oder mehrere Dosierer (18) nach einem der vorhergehenden Ansprüche aufnimmt und jeder mit einem Behälter (14) verbunden ist.

14. Ausgabevorrichtung (10) nach Anspruch 13, bei der die Ausgabevorrichtung (10) einen Sockel (98) für die Aufnahme des jeweiligen Dosierers (18) und Haltemittel (100) für jeden Behälter (14) oberhalb des Dosierers (18) aufweist, mit dem dieser verbunden ist, und bei der jeder Sockel (98) einen Positionieranschlag (102) aufweist, gegen den wenigstens ein unterhalb des Dosierers (18) vorgesehener Zapfen (104) stößt, und Positionierhaltemittel (106, 107), die den Dosierer (18) einfassen, und bei der die Haltemittel (100) die Gestalt wenigstens eines Arms (114) aufweisen, die es gestatten, jeden Behälter (14) oberhalb des zugeordneten Dosierers (18) aufzuhängen.

15. Ausgabevorrichtung (10) nach Anspruch 13 oder 14, bei der die Ausgabevorrichtung (10) einen Entleerungstrichter (122) aufweist, der unter jedem Dosierer (18) angeordnet ist.

## Claims

1. A measurer (18) for a device (10) dispensing a product (16) in powder form, the measurer (18) comprising a fixed hopper (20), a slide (22) able to move in translation with respect to the hopper (20), and an apportioning scraper (24) constrained to translate with the movable slide (22), the hopper (20) comprising a top part (26), a bottom part (30) with a cross section less than the cross section of the top part, and an intermediate part (28) connecting the top part (26) to the bottom part (30), the top part (26) being open upwards in order to receive by gravity the powder product (16) coming from a container (14), the apportioning scraper (24) translating in the bottom part (30), and the intermediate part (28) having a cross section decreasing gradually so as to decrease to that of the bottom part (30), the intermediate part (28) comprising, in its first front half (32), a face (34) inclined towards the bottom part (30) of the measurer, the measurer (18) being **characterised in that** it comprises means (62) for guiding the powder product (16) towards the inclined face (34) of the intermediate part (28) of the measurer.

2. A measurer (18) according to claim 1, in which the guide means (62) take the form of a vertical conduit (64) disposed above the inclined face (34).

3. A measurer (18) according to claim 2, in which, the bottom end (66) of the conduit (64) being bevelled so as to match the profile of the top surface (S34) of the inclined face (34), a flow passage (68) is provided between the bottom end (66) of the conduit (64) and the inclined face (34).

4. A measurer (18) according to claim 3, in which the guide section (S64) of the conduit extends beyond the bottom edge (70) of the inclined face (34) in order to create a flow passage (68), and in which the guide section (S64) extends mainly above the inclined face (34).

5. A measurer (18) according to one of claims 2 to 4, in which the conduit (64) comprises one or more blades (65) passing right through it inside.

6. A measurer (18) according to one of claims 2 to 5, in which, the top part (26) of the hopper (20) being closed by a cover (72), the conduit (64) is held above the inclined face (34) by this cover (72).

7. A measurer (18) according to claim 6, in which the conduit (64) is made in one piece with the cover (72).

8. A measurer (18) according to one of claims 2 to 7, in which, the measurer (18) comprising means (88) for detecting the powder product (16) passing through the conduit (64), these detection means (88) taking the form of infrared LEDs (90) positioned opposite apertures (92) produced in the wall (94) of the conduit (64).

9. A measurer (18) according to one of claims 2 to 8, in which, the measurer (18) comprising means (80) for receiving a container (14), these reception means (80) take the form of a bore (84) provided at the top part (86) of the conduit (64).

10. A measurer (18) according to one of the preceding claims, in which the inclined face (34) emerges directly in the bottom part (30).

11. A measurer (18) according to one of the preceding claims, in which, the scraper (24) comprising a front wall (42) and a scraping part (44) at the rear, the scraping part (44) being connected to the front wall (42) by two lateral flanges (50-1, 50-2), an opening (52) separating the front wall (42) from the scraping part (44) and one lateral flange from the other, and the scraping part (44) having a triangular cross section with a front surface (58) of height (H58), the front wall (42) and the lateral flanges (50-1, 50-2) have flat vertical internal surfaces (S42, S501, S502), and the front surface (58) of the scraping part (44) is also flat and vertical.

12. A measurer (18) according to claim 11, in which the front wall (42) comprises a scraping lip (60) at the bottom of its internal surface (S42).

13. A device (10) for dispensing a powder product (16), the dispensing device (10) being mounted on a chassis (12), the dispensing device (10) receiving one or more measurers (18) according to one of the preceding claims each connected to a container (14).

14. A dispensing device (10) according to claim 13, in which, the dispensing device (10) comprising a reception base (98) for each measurer (18) and means (100) for holding each container (14) above the measurer (18) to which it is connected, each base (98) comprises a positioning stop (102) against which at least one lug (104) provided under the measurer (18) comes into abutment, and means (106, 107) for holding in position, fitting on the measurer (18), and the holding means (100) take the form of at least one arm (114) for suspending each container (14) above the associated measurer (18).

15. A dispensing device (10) according to one of claims 13 or 14, in which the dispensing device (10) comprises a discharge hopper (122) placed under each measurer (18).
